# EUROPEAN PATENT APPLICATION

(11) **EP 2 107 479 A1**
(43) Date of publication of application: **07.10.2009**
(21) Application number: 09156004.5
(22) Date of filing: 24.03.2009
(51) Int. Cl.: G06F 17/30

(54) **File system and method for controlling file system**

(30) Priority: 02.04.2008 JP 2008096518
(71) Applicant: NEC CORPORATION, Minato-ku, Tokyo 108-8001 (JP)
(72) Inventor: Nagano, Hiroaki, Tokyo 108-8001 (JP)
(74) Representative: Vossius & Partner

(57) **Abstract**

A file system includes an entity file region allocated to a client; and a conditional symbolic link file configured to store a conversion rule. A path analyzing section refers to the conversion rule stored in the conditional symbolic link file to convert a virtual path specified when the client accesses the entity file region through a network into an entity path based on an attribute data of the client and to specify the entity file region in the file system based on the entity path.

## Description

The present invention relates to a network storage system using a file system, and especially relates to a network storage system in which a file system accessed by clients via a network.

A NAS (Network Attached Storage) is a technique for sharing storage resources via a network by a plurality of clients. The client can read and write a file on the NAS via an IP (Internet Protocol) network by using a file access protocol such as NFS (Network File System) and CIFS (Common Internet File System).

Data accessed by only a particular client is often stored in a file system of an apparatus such as NAS for a practical operation, in addition to data shared by the plurality of clients. A region in which such a data is stored can be referred to as a dedicated region for the client. The client uses a path data to access the allocated region, and finally stores the path data as a peculiar setting data. Here, a grid computing in which computers having almost the same configuration are connected in parallel and of a virtual PC (Personal Computer) server in which many virtual PCs having almost the same configuration are aggregated will be considered. The NAS connected to a network is used as a common storage from viewpoints of aggregation of management and flexibility of configuration. However, the path data for accessing the dedicated region on the NAS allocated to each of the computers in the grid computing and the virtual PCs is generally different for every client. For this reason, an enormous amount of setting operations is required, resulting in an increase of management cost.

In a conventional file server, a path data of an access request for a virtual path which is provided in common to clients for access to dedicated regions is converted into a path data in a file system by using a data indicating an accessing client and a user data in interpreting the access request in a file access protocol on the file server. In the file server employing such a method, it is necessary to always maintain consistency between a conversion rule of a file access protocol interpreting section and an entity file configuration in the file system, in order to correctly execute the conversion. The setting of the conversion rule is so complicated that there is a high risk of causing a setting mistake in case of manual setting. Furthermore, since the conversion rule and the entity files are separately stored, it is necessary to establish synchronization between them in backing up them. However, it is difficult in practice to strictly ensure the synchronization between them.

The following techniques are known as techniques related to a file access system via a network.

In Japanese Patent Application Publication (JP-P2005-063223A) is disclosed a secure file sharing method for realizing a detailed access control in an OS level, ensuring operational ease by automatically generating a security policy, and ensuring convenience of user by aggregating supply resources by using a virtual directory. In this secure file sharing method, files stored in a storage device are shared. A different identifier is assigned to a process as an object on a secure OS in units of users, and an identifier is assigned to a resource as subject in units of users, in units of sharing groups, and in units of permissions for access control.

Also, in Japanese Patent Application Publication (JP-P2006-003962A) is disclosed a file system in which a plurality of network storages is shown to a user as a single network storage. This file system includes a distribution control section operating independently from the network storages, and the distribution control section receives a file access request from a client and informs a network storage storing a target file to the client to prompt reconnection. In addition, the distribution control section records an access to each file in a file management table, and moves and copies the files between the network storages on the basis of this table. Thus, loads on the network storages are distributed and empty capacities of the network storages can be equalized.

An object of the present invention is to provide a network storage system with a file system for NAS, in which a rule for conversion of a virtual path is retained in the file system as an entity file to eliminate inconsistency between settings and actual presence and to realize a flexible operational management.

In addition, another purpose of the present invention is to provide a network storage system with a file system, in which a plurality of entity files can be accessed in response to a plurality of file accesses of a same setting.

In an aspect of the present invention, a file system includes: an entity file region allocated to a client; a conditional symbolic link file configured to store a conversion rule; and a path analyzing section configured to refer to the conversion rule stored in the conditional symbolic link file to convert a virtual path specified when the client accesses the entity file region through a network into an entity path based on an attribute data of the client and to specify the entity file region in the file system based on the entity path.

In another aspect of the present invention, a control method of a file system, is achieved: by allocating an entity file region to a client; by storing a conversion rule in a conditional symbolic link file; by converting a virtual path specified when the client accesses the entity file region through a network into an entity path based on an attribute data of the client by referring to the conversion rule stored in the conditional symbolic link file; and by specifying the entity file region in the file system based on the entity path.

In still another aspect of the present invention, a computer-readable software program is provided in which a computer-readable software program is stored to realize a control method of a file system.

The present invention can provide a file system which, flexibly and easily with keeping a consistency, is able to manage rules for conversion of accesses using virtual paths from a plurality of clients and to manage entity files to be a conversion target.

Moreover, the present invention can provide a file system enabling safe accesses to different entity files in response to a plurality of file accesses based on the same configuration.

The above and other objects, advantages and features of the present invention will be more apparent from the following description of certain exemplary embodiments taken in conjunction with the accompanying drawings, in which:
FIG. 1 is a functional block diagram showing a configuration of a network storage system with a file system according to the present invention;
FIG. 2 is a block diagram showing a configuration of a file server in the network storage system of the present invention;
FIG. 3 is a diagram showing an example of actual process of the file system;
FIG. 4 is a diagram showing an example of an ACL in the file system; and
FIG. 5 is a flowchart showing an operation of the file system.

Hereinafter, a network storage system including a file system according to the present invention will be described in detail with reference to the attached drawings.

### [First Exemplary Embodiment]

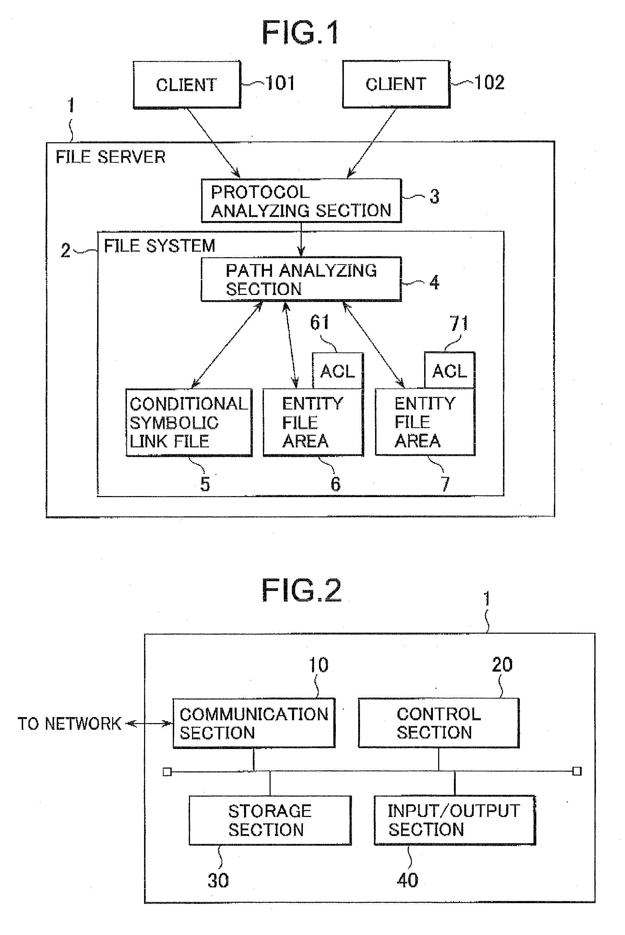

FIG. 1 is a functional block diagram showing a configuration of a network storage system according a first exemplary embodiment of the present invention. The network storage system includes a client 101, a client 102, and a file server 1. The file server 1 includes a protocol analyzing section 3 and a file system 2. Here, to simplify the description, only two clients, the client 101 and the client 102, are used. However, the number of clients is not limited to two and more clients may be used in some cases.

The client 101 and the client 102 are client terminals used by users, and PC terminals having a similar configuration. Therefore, only the client 101 will be described below. The client 101 accesses the file server 1 via a network (not shown). The client 101 sends a file access request so as to access a file or a directory (hereinafter, to be collectively referred to as a file) stored in the file server 1. After accessing the file stored in the file server 1, the client 101 edits the file, for example.

The protocol analyzing section 3 converts a file access protocol used on a network into a protocol used in the file system 2. In the network storage system, an NFS (Network File System) and a CIFS (Common Internet File System) are employed as the file access protocol used between the file server 1 and the client 101 and client 102. Since these file access protocols are conventionally well known, detailed description of them are omitted. The protocol analyzing section 3 receives the file access request from the client 101 or the client 102, converts the file access request in a file access protocol on a network (network file access request) into a file access request in the file system 2 (system file access request), and outputs the system file access request to the file system 2.

The file system 2 includes a path analyzing section 4, a conditional symbolic link file (hereinafter, to be referred to as a link file) 5, an entity file region 6, an entity file region 7, an access control list (hereinafter, to be referred to as an ACL) 61, and an ACL 71.

The path analyzing section 4 sets a path based on the system file access request. The client 101 and the client 102 are respectively allocated with the entity file regions 6 and 7 as regions dedicated to them in the file system 2. It should be noted that to simplify the description, it is assumed that the dedicated regions allocated to the clients 101 and 102 are only the entity file regions 6 and 7. If a number of other clients are included, the dedicated region may be allocated to each of the clients.

Since the client 101 and the client 102 operate in a same manner, only the client 101 will be described below. The client 101 sends a file access request which includes a data for specifying a common path in the file system 2, in order to access the dedicated region as well as files. In the present embodiment, a path designated based on the file access request by the client 101 is referred to as a virtual path. Meanwhile, a path used to access files in the file system 2 is referred to as an entity path.

The path analyzing section 4 receives the system file access request from the protocol analyzing section 3, extracts the virtual path specified in the system file access request, analyzes the virtual path, and converts the virtual path into the entity path for a target directory and file. When the virtual path has to be converted by using the link file 5 in the analyzing of the virtual path, the path analyzing section 4 specifies the entity path by using the link file 5.

Next, the link file 5 stores a redirecting data to a specific region in the file system 2. The link file 5 is used to convert a virtual path into an entity path on the basis of a predetermined rule. In the present embodiment, the link file 5 is used to convert the virtual path into the entity path on the basis of a host name for an accessing source client. The link file 5 will be described later in detail.

In the file system 2, the entity file region 6 shows a specific region of the entity file. In the present embodiment, the entity file region 6 is allocated as a region used by only the client 101. In the file system 2, the entity file region 7 shows a specific region in the entity file. In the present embodiment, the entity file region 7 is allocated as a region used by only the client 102.

A client data is required in a method of solving a variable part of the conditional symbolic link or converting the virtual path into the entity path. The client data can be provided in the following methods.
(1) The client data including the host name is set as an environment variable of a process when the process of accessing from each of the clients is predetermined. This method is often employed when various data peculiar to the process and changeable should be stored in the OS of a UNIX and Window. The file system 2 refers to the environment variables of the accessing process to solve the path problem.
(2) An area for storing data of the process or a thread is extended and the data of the client is stored therein. A structure on the OS kernel side is extended and the client data is stored therein. In this case, system calls are extended to manipulate the extended process attributes in many cased.
(3) A data holding capability of the process or thread is extended and the client data is stored therein. The attribute data is added in an area of the OS. This method matches the most functionally to an access control list method in which an access right is given for each client, but is a little bit out of the goal from the viewpoint of solution of symbolic link.

The above three methods may be combined.

Even through either method is employed, the file system 2 can converts the virtual path into an entity path based on a data saved in the file system 2 and a condition acquired at the time of access. The accessing side does not need to know that the file system carries out such a redirection, and any setting including a redirecting path is also not required.

The ACL 61 is used to store an access control data to the entity file region 6. The ACL 71 is used to store an access control data to the entity file region 7.

FIG. 2 shows a hardware configuration of the file server 1. The file server 1 includes a communication section 10, a control section 20, a storage section 30, and an input/output section 40. It should be noted that various functions of the file server 1 are realized based on a computer software program (not shown) by using the sections shown in FIG. 2. The program is installed from a computer-readable recording medium (not shown) in the storage section 30.

The communication section 10 includes a communication part, and communicates with the client 101 and the client 102 via a network. The control section 20 includes a CPU (Central Processing Unit), and realizes a function of the file server 1 by reading and executing the software program installed in the storage section 30. The control section 20 realizes the functions of the protocol analyzing section 3 and the path analyzing suction 4. The storage section 30 includes a ROM (Read Only Memory), a RAM (Random Access memory), or a hard disk. The storage section 30 stores the software program and data used for realizing the functions of the file server 1. Also, the storage section 30 stores the link file 5, the entity file region 6, the entity file region 7, the ACL 61, and the ACL 71. The input/output section 40 includes a keyboard, a mouse, or an LCD (Liquid Crystal Display). The input/output section 40 functions an interface with an operator of the file server 1.

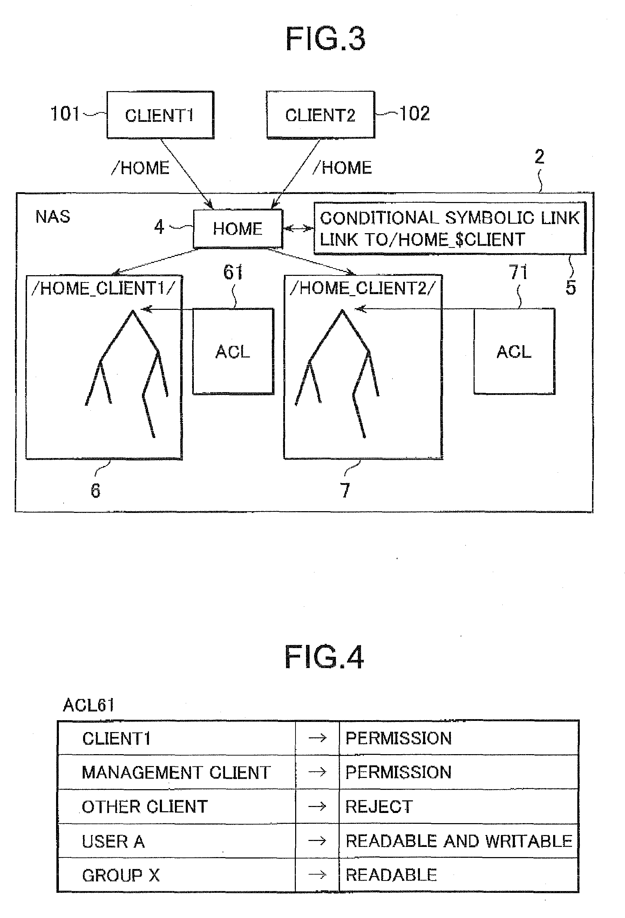

Referring to FIG. 3, the path analyzing section 4 and the link file 5 will be described in detail. FIG. 3 shows an actual process example of the file system 2. In FIG. 3, an entity path "/home_client1/" is allocated to the entity file region 6. As described above, the entity file region 6 is a dedicated region for the client 101. In addition, an entity path "/home_client2/" is allocated to the entity file region 7. As described above, the entity file region 7 is a dedicated region for the client 102.

Generally, when its dedicated region is accessed, each of the client 101 and the client 102 issues the file access request including a path used to specify an entity path for its dedicated region. That is, the client 101 issues the file access request to designate the path "/home_client1/". Also, the client 102 issues the file access request to designate the path "/home_client2/". However, in this way, the path data designating the respective dedicated regions are different from each other. As a result, when the number of clients increases, setting operations for the respective clients is heavy load. In the present embodiment, the virtual path provided in common to the respective clients and is converted into an entity path designating the dedicated region on the basis of the rule preliminarily stored in the link file 5.

Referring to FIG. 3, the link file 5 holds a conversion rule "/home_$client". The conversion rule is set to replace a character string "$client" by a host name of an accessing client in accessing to the virtual path "/home_$client". For example, it is assumed that a host name of the client 101 is "client1". In this case, the client 101 issues the file access request including a virtual path "/home". The path analyzing section 4 receives the file access request from the protocol analyzing section 3, and refers to the link file 5 to convert the virtual path "/home" to the entity path "/home_client1" on the basis of the conversion rule of the link file 5. Thus, the path analyzing section 4 accesses the entity path "/home_client1".

In a similar manner, it is supposed that a host name of the client 102 is "client2". The client 102 issues the file access request including the virtual path "/home". The path analyzing section 4 receives the file access request from the protocol analyzing section 3, and refers to the link file 5 to convert the virtual path "/home" to the entity path "/home_client2" on the basis of the conversion rule of the link file 5. Thus, the path analyzing section 4 accesses the entity path "/home_client2".

As described above, the path analyzing section 4 can convert the identical virtual path "/home" from different clients into different entity files on the basis of the conversion rule previously set to the link file 5. Accordingly, in case of many clients, the respective clients can issue the file access request by using the identical virtual path. In addition, even when an entity path to an entity file is changed in the file system 2, it is sufficient to change the conversion rule in the link file 5.

Next, referring to FIGS. 3 and 4, the ACL 61 and the ACL 71 will be described. In the present embodiment, the client 102 can try to access the entity file region 6 dedicated to the client 101, by directly designating the path "/home__client1". Such an access is necessary in case where an administrator of the file server 1 backs up the file system 2. However, it is a problem that a dedicated region can be accessed by a non-dedicated client. For this reason, an access control section (not shown) according to the present embodiment extends a conventional access control list. Specifically, the ACL 61 and the ACL 71 can use data from an access source for an access control.

FIG. 4 shows an example of the ACL 61. The ACL 61 stores the access control data for the entity file region 6. Referring to FIG. 4, in the ACL 61, only the "client1" and an "administrative client" are permitted to access the entity file 6. Additionally, conventionally used user-based access control data and group-based access control data are stored. Accordingly, the path analyzing section 4 may control an access by using a host name of a client which receives the file access request. Additionally, in the present embodiment, the ACL 61 and the ACL 71 are included in the file system 2 as shown in FIG. 3. Thus, unlike a conventional example where the protocol analyzing section 3 controls an access, the file system 2 according to the present embodiment can prevent consistency between each ACL and the file entity and data synchronization in the backup and the restoration.

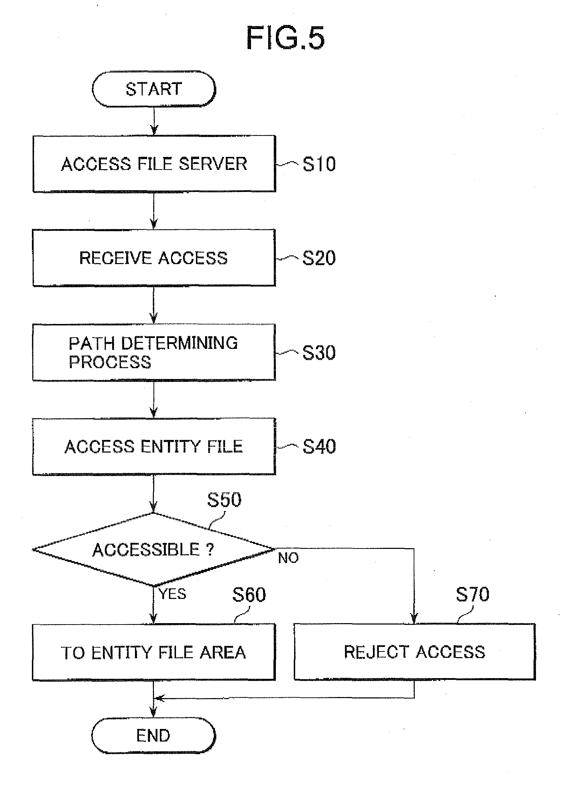

Next, referring to FIGS. 3 and 5, an operation method of the network storage system according to the present embodiment will be described. FIG. 5 is a flowchart showing an operation of the network storage system according to the present embodiment. It should be noted that the method of operation will be described by using only the client 101 and only the ACL 61.

### Step S10:

In the network storage system, the entity file region 6 (the entity path "/home_client1" is previously allocated to the client 101 as a dedicated region. The client 101 (having the host name of "client1") accesses the entity file region 6 which is the dedicated region of the client 101. The client 101 issues the network file access request based on a file access protocol used between it and the file server 1 to transmit to the file server 1 via a network. The client 101 transmits the network file access request which includes the virtual path "/home" as an access target.

### Step S20:

The protocol analyzing section 3 receives the network file access request from the client 101, converts the network file access request based on the file access protocol used between the file server 1 and the client 101 into the system file access request used in the file system 2. The protocol analyzing section 3 outputs the system file access request to the path analyzing section 4.

### Step S30:

The path analyzing section 4 receives the system file access request from the protocol analyzing section 3, and extracts the virtual path "/home" to an access target from the system file access request. The path analyzing section 4 analyzes the virtual path to specify an entity path to a directory or a file to be accessed. In the path analysis, the path analyzing section 4 converts the virtual path "/home" into the entity path by referring to the link file 5. In the present embodiment, the "/home_$client" is described in the link file 5. The path analyzing section 4 generates the entity path "/home_client1" from the virtual path "/home" by using the link file 5.

### Step 540:

The path analyzing section 4 accesses the entity path "/home_client1".

### Step S50:

An access control by the ACL 61 is set for the accessing to the entity file region 6. The path analyzing section 4 refers to the ACL 61 to determine whether or not the client 101 can access the entity path "/home_client1". When the access is possible or permissible, the control flow proceeds to step 360. On the other hand, when the access is not possible, the operation proceeds to step S70.

### Step S60:

The ACL 61 previously holds access permission in the access control data to permit the access by the client having the host name "client1". In such a case, the client 101 can access the entity file region 6 by using the entity path "/home_client1",

### Step S70:

In this case, the ACL 61 does not previously hold access permission in the access control data to inhibit the client having the host name "client1" to access. In such a case, the client 101 cannot access the entity file region 6 by using the entity path "/hom_client1".

As described above, in the present invention, in a conditional symbolic link of the link file 5, the character string "$client" is replaced by a host name of an accessing client. However, the description of the conditional symbolic link is not limited to this and can take various forms.

In addition, the conditional symbolic link recorded in the link file 5 uses a host name of the accessing client. The conditional symbolic link may be replaced by any one of an IP address of the accessing client, a data indicating a file access protocol used by the accessing client, and the like, or a combination of some of them, including the host name of the accessing client. In this manner, when an identical client accesses the file server 1 by using a plurality of file access protocols, it is possible to allow the client to access completely different entity file region based on each of the file access protocols. Additionally, in this case, it is preferable that the descriptions of the ACL 61 and the ACL 71 are changed to correspond to the IP address and the like.

As described above, according to the present invention, the conversion rule from a virtual path to an entity path and the access control data to an entity file are all included in the file system 2. For that reason, an inconsistency between the entity file and the conversion rule or the access control data does not occur. Moreover, not only the entity file but also the conversion rule and the access control data can be saved exclusively through a backup process of the file system 2. Accordingly, not only the entity file but also the conversion rule and the access control data can be restored exclusively through a restoration process in the file system 2.

In addition, according to the present invention, a configuration of the conversion rule from a virtual path to an entity path can be changed by rewriting the conditional symbolic link in the link file 5. For that reason, change of setting to a client side is not required, and thus a storage position of an entity file can be determined more freely in the file system 2. Furthermore, many clients included in the network storage system can access their dedicated regions in the file server 1 by using an identical configuration. An access to each dedicated region can be controlled on the basis of attribute data such as a host name of the accessing client. Consequently, each of clients can safely access their dedicated regions by using an identical configuration.

While the present invention has been particularly shown and described with reference to the exemplary embodiments thereof, the present invention is not limited to these exemplary embodiments. It will be understood by those of ordinary skill in the art that various changes in form and details may be made therein without departing from the spirit and scope of the present invention as defined by the claims.

## Claims

1. A file system comprising:
an entity file region allocated to a client;
a conditional symbolic link file configured to store a conversion rule; and
a path analyzing section configured to refer to the conversion rule stored in said conditional symbolic link file to convert a virtual path specified when said client accesses said entity file region through a network into an entity path based on an attribute data of said client and to specify said entity file region in said file system based on the entity path.

2. The file system according to claim 1, further comprising:
an access control list configured to store an access control data,
wherein said path analyzing section determines whether or not access to said entity file region by said client is permitted, based on the access control data in said access control list.

3. The file system according to claim 1 or 2, wherein said attribute data is one of a host name of said client, an IP address of said client, and a file access protocol used when said client accesses said entity file region through the network, and a combination of some of them.

4. A control method of a file system, comprising:
allocating an entity file region to a client;
storing a conversion rule in a conditional symbolic link file;
converting a virtual path specified when said client accesses said entity file region through a network into an entity path based on an attribute data of said client by referring to the conversion rule stored in the conditional symbolic link file;
specifying said entity file region in said file system based on the entity path.

5. The control method according to claim 4, further comprising:
recording an access control data in an access control list, the access control data being based on the attribute data; and
determining whether or not access to said entity file region by said client is permitted, based on the access control data in said access control list.

6. The control method according to claim 4 or 5, wherein said attribute data is one of a host name of said client, an IP address of said client, and a file access protocol used when said client accesses said entity file region through the network, and a combination of some of them.

7. A computer-readable software program in which a computer-readable software program is stored to realize a control method of a file system, wherein said control method comprises:
allocating an entity file region to a client;
storing a conversion rule in a conditional symbolic link file;
converting a virtual path specified when said client accesses said entity file region through a network into an entity path based on an attribute data of said client by referring to the conversion rule stored in the conditional symbolic link file;
specifying said entity file region in said file system based on the entity path.

8. The computer-readable software program according to claim 7, wherein the control method further comprises:
recording an access control data in an access control list, the access control data being based on the attribute data; and
determining whether or not access to said entity file region by said client is permitted, based on the access control data in said access control list.

9. The computer-readable software program according to claim 7 or 8, wherein said attribute data is one of a host name of said client, an IP address of said client, and a file access protocol used when said client accesses said entity file region through the network, and a combination of some of them.
